# EUROPÄISCHE PATENTANMELDUNG

(11) **EP 3 858 687 A1**
(43) Veröffentlichungstag der Anmeldung: **04.08.2021**
(21) Anmeldenummer: 20154424.4
(22) Anmeldetag: 29.01.2020
(51) Int. Cl.: B60T 7/04, B60T 11/10, B60T 11/18

(54) **AGGREGAT MIT EINEM AXIAL BETÄTIGBAREN KOLBEN**

(71) Anmelder: Continental Automotive GmbH, 30165 Hannover (DE)
(72) Erfinder: Varlan, Ionut, 60488 Frankfurt am Main (DE); Frunza, Cosmin, 60488 Frankfurt am Main (DE); Paduraru, Emilian, 60488 Frankfurt am Main (DE)

(57) **Zusammenfassung**

Es wird eine verbesserte, irreversible sowie dauerhaft stabile Verbindung zwischen einem Kolben (2) und einer Betätigungseinheit (4) eines Aggregats (1) vorgeschlagen, welche durch umformtechnische Ausbildung eines axialen Hinterschnitts (5) erzeugt wird und dabei die Gefahr einer Deformation der äußeren Mantelfläche des Kolbens reduziert oder ausschließt. Hierbei wird der Werkstoff des Kolbens (2) in eine radiale Nut (6) an der Betätigungseinheit (4) plastisch verdrängt, wobei der Kolben (2) eine axiale Ausnehmung (9) aufweist, welche die Nut (6) in einem Querschnittsbereich zwischen Mantelfläche (8) und der Nut (6) radial außen umläuft.

## Beschreibung

Die Erfindung betrifft ein Aggregat mit einem axial versetzbaren Kolben und einer umformtechnisch mit dem Kolben verbundenen Betätigungseinheit, insbesondere ein Bremsgerät für eine hydraulische Kraftfahrzeugbremsanlage.

Aggregate mit einem durch eine Betätigungseinheit axial betätigbaren Kolben sind in der Hydraulik und Thematik bekannt und vielfach verbreitet. Beispielsweise kommen derartige Aggregate als Bremsgeräte für hydraulische Kraftfahrzeug Bremsanlagen vor. Die kraftübertragende Verbindung zwischen der Betätigungseinheit und dem Kolben soll dabei möglichst einfach und dennoch präzise ausgeführt und dauerhaft bestehen. Es ist bekannt, besonders robuste, irreversible bzw. unlösbare Verbindungen umformtechnisch herzustellen.

Kolben von gattungsgemäßen Aggregaten werden oft aus Metall, insbesondere Aluminium oder vergleichbaren Leichtmetallen und Leichtmetalllegierungen hergestellt, welche plastisch verformbar sind. Um derartige vergleichsweise weiche Werkstoffe im Betrieb nicht zu beschädigen und eine dauerhafte Präzision aufrechtzuerhalten, ist es bekannt, dass die Betätigungseinheit an ihrer Schnittstelle zum Kolben ein gesondertes Druckstück aufweist, welches bei einer vergleichsweise geringen Flächenpressung eine optimale Krafteinleitung in den Kolben gewährleistet.

Beispielsweise sind um umformtechnisch erzeugte Verbindungen bekannt, bei denen ein am Kolben ausgebildeter axial abstehender Falz nach dem Einführen des Druckstücks in eine korrespondierende Aufnahmebohrung in dem Kolben hinter einem rückwärtigen Absatz des Druckstücks umgelegt wird, wie es beispielsweise in der Fig.1b in DE 10 2016 218 183 A1 gezeigt ist. Für eine derartige Verbindung werden jedoch ein separates Werkzeug zum umlegen des Falzes sowie ein radialer Abstand zwischen dem Druckstück und einer inneren Mantelfläche des Kolbens zum einführen des Werkzeugs benötigt. Montagevorgang wird hierdurch verkompliziert und die Möglichkeiten für radiale Abstützung des Druckstücks in dem Kolben stark eingeschränkt.

Ein weiterer Aspekt betrifft die Form und Maßhaltigkeit des Kolbens. Die äußere Mantelfläche des Kolbens ist funktionsbedingt mit einer möglichst engen Spielpassung in der zugeordneten Kolbenbohrung angeordnet. Zudem dient sie dabei oft gleichzeitig als Dichtfläche, an welcher Dichtelemente abgleiten wie beispielsweise Radialdichtringe und dergleichen. An die Form- und Maßtoleranzen der Mantelfläche werden daher besonders hohe Anforderungen gestellt. Bei Umformung von Teilbereichen des Kolbens entstehen hohe Kräfte, welche zu einer Deformation der Mantelfläche führen können.

Es stellt sich somit eine Aufgabe, eine verbesserte, dauerhaft stabile Verbindung zwischen dem Kolben und der Betätigungseinheit vorzuschlagen, welche möglichst einfach, schnell und präzise herbeigeführt werden kann und wobei die Gefahr einer möglichen Deformation der äußeren Mantelfläche des Kolbens reduziert oder ausgeschlossen ist.

Die Aufgabe wird erfindungsgemäß durch ein Aggregat mit Merkmalskombination nach Anspruch 1 gelöst. Unteransprüche geben weitere vorteilhafte Ausführungen und Weiterbildungen der Erfindung an.

Weitere Details, Merkmale und Vorteile der Erfindung ergeben sich aus der nachfolgenden Beschreibung eines erfindungsgemäßen Ausführungsbeispiels. Nachstehend zeigten:
Fig.1 eine vereinfachte Darstellung von Teilansicht einer erfindungsgemäßen Ausführungsform am Beispiel eines Bremsgeräts für eine hydraulische Kraftfahrzeugbremsanlage in Axialschnitt.
Fig.2 eine vergrößerte Ansicht des Verbindungsbereich zwischen der Betätigungseinheit und dem Kolben gemäß Fig.1 vor dem Zusammenfügen.
Fig.3 den Verbindungsbereich gemäß Fig.2 nach dem Zusammenfügen.

### Fig.1

Das Aggregat 1 weist ein Gehäuse 20 mit einer Kolbenbohrung 3 auf, in der eine mit einer Bremsflüssigkeit gefüllte Drucckammer 16 eingerichtet ist. Die Druckkammer 16 ist hydraulisch mit wenigstens einer hier nicht gezeigten Radbremse verbindbar.

Von einer Seite ist die Druckkammer 3 durch einen Kolben 2 begrenzt. Der Kolben 2 wird in der Kolbenbohrung 3 mittels einer Betätigungseinheit 4 entlang einer Bohrungsachse A linear versetzt und gleitet dabei mit seiner radial äußeren Mantelfläche 8 an Dichtelementen 15, 15' ab, welche eine Abdichtung zwischen der Atmosphäre und der Druckkammer 16 gewährleisten.

Der Kolben 2 ist hier in seiner unbetätigten Ausgangstellung abgebildet und wird durch das Federelement 17 in Richtung eines gehäusefesten Anschlags 18 beaufschlagt. Der Anschlag 18 definiert somit stets die unbetätigte Ausgangslage beziehungsweise die Nulllage des Kolbens 2. Ein weiteres Federelement 17' ist zwischen dem Gehäuse 20 unter Betätigungseinheit 4 eingespannt und beaufschlagt diese entgegen der Betätigungsrichtung.

Die Betätigungseinheit 4 in dem abgebildeten Beispiel weist eine Druckstange 10 auf, welche über ein Pedal 19 durch eine Person direkt betätigt wird. Die Krafteinleitung aus der Druckstange 10 in den Kolben 2 erfolgt über ein gesondertes Druckstück 11, welcher die Schnittstelle zwischen der Betätigungseinheit 4 und dem Kolben 2 bildet.

Das Druckstück 11 ist rotationssymmetrisch zur Betätigungsachse A aufgebaut und weist eine Sacklochbohrung 21 mit einem trichterförmigen Einlauf 22 auf. Der Kugelkopf der Druckstange 10 ist in der Sacklochbohrung 21 axial fixiert angeordnet, so dass die Druckstange 10 relativ zur Betätigungsachse A verschwenkt werden kann, wobei der Schwenkbereich durch den Einlauf 22 begrenzt ist. Die Druckstange 10 muss unter anderem deswegen verschwenkbar gelagert sein, weil zum einen eine ideale Koaxialität zur Betätigungsachse A im eingebauten Zustand im Fahrzeug nicht gewährleistet werden kann, zum anderen der Kraftangriffspunkt aus dem Pedal 19 bei Betätigung in radiale Richtung schwankt. Dies führt dazu, dass die Druckstange 10 bei Betätigung des Kolbens 2 im Allgemeinen um die Betätigungsachse A taumelt.

Der Kolben 2 kann sowohl aus einem Metallwerkstoff, vorzugsweise einer Aluminiumlegierung, als auch Kunststoff, oder einer Kombination der beiden hergestellt sein. Das Druckstück 11 ist aus einem gegenüber dem Kolbenwerkstoff härteren Werkstoff ausgebildet, vorzugsweise einer Stahllegierung. Wird der Kolben 2 aus einer Kombination von mehreren Werkstoffen erzeugt, so muss das Druckstück 11 härter sein als der Kolbenwerkstoff in seinem Kontaktbereich.

Das Druckstück 11 ist mit dem Kolben 2 unlöslich bzw. irreversibel verbunden. Diese Verbindung ist durch einen umformtechnisch erzeugten axialen hinter Schnitt 5 gebildet. Hierbei wird ein Bereich des Kolbens 2 derart plastisch deformiert, dass der Werkstoff des Kolbens 2 in eine in dem Druckstück 11 ausgebildete radiale Nut 6 fließt.

In dem Kolben 2 ist eine sacklochförmige Axialbohrung 7 koaxial zu Betätigungsachse A ausgebildet, in welche das Druckstück 11 abschnittsweise eingetaucht ist. Konzentrisch zu Axialbohrung 7 ist in dem Kolben 2 ein axial in Richtung Betätigungseinheit 4 vorgestreckter Kragen 12 ausgebildet, welcher die Nut 6 radial außen umläuft. Zu seinem Ende hin verjüngt sich der Kragen 12. im dargestellten Ausführungsbeispiel ist der Kragen 12 kegelig mit einem Kegelwinkel α von etwa 45° ausgebildet. Innerhalb der Erfindung sind auch andere Kegelwinkel durchaus zulässig, vorzugsweise sollten Sie nicht >60° sein, um eine Krafteinleitung in die Mantelfläche 8 sowie radiale Stauchung des Werkstoffs beim Umformvorgang zu reduzieren.

Durch den Kragen 12 ist zwischen der Nut 6 und der Mantelfläche 8 in radiale Richtung eine umlaufende Ausnehmung 9 gebildet. Die Ausnehmung 9 unterbindet eine direkte Krafteinwirkung auf die Mantelfläche 8 in radiale Richtung beim umformtechnischen Erzeugen des Hinterschnitts 5.

### Fig.2

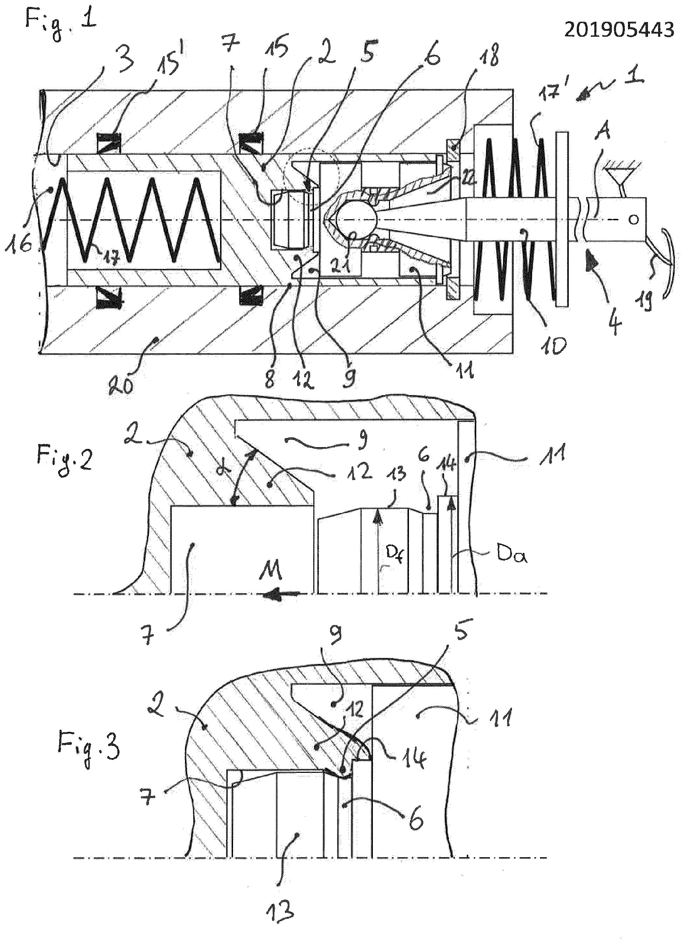

Fig.2 zeigt eine vergrößerte Ansicht des Verbindungsbereich zwischen dem Druckstück 11 und dem Kolben 2 vor dem Fügen bzw. Herausbilden des Hinterschnitts 5. Zum Verbinden bzw. Fügen wird das Druckstück 11 in den Kolben 2 in Montagerichtung M hineingepresst. In Montagerichtung M unmittelbar vor der Nut 6 ist an dem Druckstück 11 ein zylindrischer Führungsabschnitt 13 mit einem Führungsdurchmesser Df ausgebildet. Der Führungsdurchmesser Df ist dabei vorzugsweise mit einer leichten Spielpassung zum Durchmesser der Axialbohrung 7 gewählt, so dass der Führungsabschnitt 13 in der Axialbohrung kippfrei geführt und gleichzeitig nicht klemmt. In Montagerichtung M unmittelbar hinter der Nut 6 bildet das Druckstück einen scharfkantigen Radialabsatz 14 mit einem Absatzdurchmesser Da auf, wobei Da < Df ist.

### Fig.3

In der Fig.3 ist der Verbindungsbereich gemäß Fig.2 nach dem Zusammenfügen dargestellt. Das Fügen bzw. die Herausbildung des Hinterschnitts 5 erfolgt zwangsweise selbsttätig alleine durch eine Relativbewegung zwischen dem Kolben 2 und dem Druckstück 11. Der Radialabsatz 14 wird dabei gegen das axiale Ende des Kragens 12 gepresst, verdrängt dabei den umliegenden, weicheren Werkstoff des Kolbens 2, in die Nut 6 hineinfließt und diese ausfüllt. Der Kragen 12 wird dabei plastisch verformt und es bildet sich ein permanenter axialer Hinterschnitt 5.Durch hohe Krafteinwirkung und das plastische fließen des Werkstoffs kann auch die radial äußere Oberfläche des Kragens 12 deformiert werden. Wegen der zwischen dieser und der Mantelfläche 8 des Kolbens 2 vorhandenen Ausnehmung 9 wird diese Deformation jedoch nicht weiter nach radial außen in die Mantelfläche 8 fortgeführt, sodass diese garantiert unbeschädigt bleibt.

### Bezugszeichen:

- 1: Aggregat
- 2: Kolben
- 3: Kolbenbohrung
- 4: Betätigungseinheit
- 5: Hinterschnitt
- 6: Nut
- 7: Axialbohrung
- 8: Mantelfläche
- 9: Ausnehmung
- 10: Druckstange
- 11: Druckstück
- 12: Kragen
- 13: Führungsabschnitt
- 14: Radialabsatz
- 15: Dichtelement
- 16: Druckkammer
- 17: Federelement
- 18: Anschlag
- 19: Pedal
- 20: Gehäuse
- 21: Sacklochbohrung zur Betätigungssachse Ar
- 22: Einlauf
- A: Betätigungsachse
- Da: Absatzdurchmesser
- Df: Führungsdurchmesser
- M: Montagerichtung
- α: Kegelwinkel

## Patentansprüche

1. Aggregat (1) mit einem Kolben (2), welcher in einer Kolbenbohrung (3) angeordnet und darin mittels einer Betätigungseinheit (4) entlang einer Betätigungsachse (A) axial versetzbar ist,
• wobei die Betätigungseinheit (4) mittels eines umformtechnisch gebildeten axialen Hinterschnitts (5) irreversibel mit dem Kolben (2) verbunden ist,
• wobei die Verbindung durch bereichsweise plastische Umformung des Kolbens (2) herbeigeführt ist,
• wobei die Betätigungseinheit (4) eine radiale Nut (6) aufweist, welche in einer Axialbohrung (7) in dem Kolben (2) angeordnet ist und in welche ein Werkstoff des Kolbens (2) zur Bildung des Hinterschnitts (5) eindringt
• und wobei der Kolben (2) in einem Querschnittsbereich zwischen seiner radial äußeren Mantelfläche (8) und der Axialbohrung (7) eine axiale Ausnehmung (9) aufweist, welche die Nut (6) radial außen umläuft.

2. Aggregat (1) nach Anspruch 1 **dadurch gekennzeichnet, dass die** Betätigungseinheit (4) eine Druckstange (10) und ein gesondertes Druckstück (11) aufweist, welches begrenzt verschwenkbar an der Druckstange (10) montiert sowie zumindest abschnittsweise in der Axialbohrung (7) angeordnet ist und die Nut (6) an dem Druckstück (11) ausgebildet ist.

3. Aggregat (1) nach Anspruch 2 **dadurch gekennzeichnet, dass** das Druckstück (11) aus einem härteren Werkstoff ausgebildet ist als der Werkstoff des Kolbens (2) zumindest in einem der Nut (6) unmittelbar benachbarten Abschnitt des Kolbens (2).

4. Aggregat (1) nach wenigstens einem der vorstehenden Ansprüche **dadurch gekennzeichnet, dass** die Ausnehmung (9) durch einen konzentrisch zur Axialbohrung (7) axial vorgestreckten umlaufenden Kragen (12) gebildet ist, welcher abschnittsweise durch plastische Umformung in die Nut (6) gehtrieben ist.

5. Aggregat (1) nach Anspruch 4 **dadurch gekennzeichnet, dass** der Kragen (12) axial in Richtung Betätigungseinheit (4) zumindest endseitig verjüngend ausgebildet ist.

6. Aggregat (1) nach Anspruch 5 **dadurch gekennzeichnet, dass** der Kragen (12) im Wesentlichen kegelig mit einem Kegelwinkel (α)<60° ausgebildet ist.

7. Aggregat (1) nach wenigstens einem der vorstehenden Ansprüche **dadurch gekennzeichnet, dass** die Betätigungseinheit (4) in axial in eine Montagerichtung (M) unmittelbar vor der Nut (6) einen Führungsabschnitt (13) mit einem Führungsdurchmesser (Df) aufweist, welcher in der Axialbohrung (7) zentriert geführt ist und in die Montagerichtung (M) unmittelbar hinter der Nut (6) einen Radialabsatz (14) mit einem Absatzdurchmesser (Da)>(Df) aufweist.

8. Aggregat (1) nach Anspruch 7 **dadurch gekennzeichnet, dass** die Verbindung zwischen der Betätigungseinheit (4) und dem Kolben (2) herbeigeführt ist, indem die Betätigungseinheit (4) axial in Montagerichtung (M) gegen den Kolben (2) gepresst wird, so dass der Radialabsatz (14) in einer axialer Anlage zum Kolben (2) das Werkstoff des Kolbens (2) plastisch in radiale Richtung in die Nut (6) verdrängt.

9. Aggregat (1) nach wenigstens einem der vorstehenden Ansprüche **dadurch gekennzeichnet, dass** die Mantelfläche (8) als eine Dichtfläche vorgesehen ist, an welcher bei einer Betätigung des Kolbens (2) wenigstens ein Dichtelement (15) abgleitet.

10. Aggregat (1) nach wenigstens einem der vorstehenden Ansprüche **dadurch gekennzeichnet, dass** das Aggregat (1) ein Bremsgerät für eine hydraulische Kraftfahrzeugbremsanlage ist, wobei der Kolben (2) in der Kolbenbohrung (3) wenigstes eine Druckkammer (16) begrenzt.
